# EUROPÄISCHE PATENTSCHRIFT

(11) **EP 0 330 996 B1**
(45) Veröffentlichungstag und Bekanntmachung des Hinweises auf die Patenterteilung: **04.08.1993**
(21) Anmeldenummer: 89103141.1
(22) Anmeldetag: 23.02.1989
(51) Int. Cl.: A22C 13/00

(54) **Schlauchförmige Nahrungsmittelhülle aus Cellulosehydrat, insbesondere künstliche Wursthülle**
Tubular food casings of cellulose hydrate, especially synthetic sausage casings
Enveloppes tubulaires en hydrate de cellulose pour aliments, en particulier enveloppes synthétiques pour saucisses

(30) Priorität: 04.03.1988 DE 3807070
(43) Veröffentlichungstag der Anmeldung: 06.09.1989
(73) Patentinhaber: HOECHST AKTIENGESELLSCHAFT, 65926 Frankfurt am Main (DE)
(72) Erfinder: Hammer, Klaus-Dieter, Dr., D-6500 Mainz 1 (DE); Winter, Hermann, D-6200 Wiesbaden (DE)

(56) Entgegenhaltungen:
- EP-A- 0 190 630
- EP-A- 0 247 437
- FR-A- 2 283 633
- FR-A- 2 338 650

## Beschreibung

Die Erfindung bezieht sich auf eine schlauchförmige Nahrungsmittelhülle, insbesondere künstliche Wursthülle, aus Cellulosehydrat mit einer äußeren Überzugsschicht, die ein fungizides Mittel enthält.

Bei Nahrungsmittelhüllen aus Cellulosehydrat besteht das Problem, daß sie während der Lagerung vor dem Befüllen mit dem Nahrungsmittel von unerwünschten Schimmelpilzen und anderen Mikroorganismen befallen und damit unbrauchbar werden. Das Wachstum der Schimmelpilze wird besonders beschleunigt, wenn die Nahrungsmittelhüllen vor ihrer Verarbeitung mit einem erhöhten Feuchtigkeitsgehalt aufbewahrt werden, der zum Füllen benötigt wird, um eine ausreichende Flexibilität der Hülle zu gewährleisten.

Zur Verhinderung dieses nachteiligen Effektes ist es bekannt, auf der äußeren Oberfläche von Celluloseschläuchen als fungizides Mittel Glycerinmonolaurat aufzubringen (EP-A-0 141 066, US-A-4,662,403). Diese Verbindung hat gegenüber wasserlöslichen fungiziden Verbindungen den Vorteil, daß sie auf der äußeren Oberfläche auch nach der Verarbeitung der Hülle, insbesondere auch nach der Heißwasserbehandlung der mit Wurstmasse gefüllten Wursthülle, noch in ausreichender Menge vorhanden ist. Mit diesem fungiziden Mittel sollen auch die in einer Zweitverpackung, z.B. in einem Kunststoffbeutel, eingeschlossenen Würste mit einer Wursthaut aus Cellulose vor dem unerwünschten Befall der Celluloseschicht mit Schimmelpilzen geschützt werden.
In einer Weiterentwicklung dieser bekannten Beschichtung enthält die Überzugsschicht neben Glycerinmonolaurat noch zusätzlich Kaliumsorbat, welches mit vernetztem Eiweiß (Casein/Glyoxal) an die Oberfläche der Wursthülle aus faserverstärkter Cellulose gebunden ist (DE-A-36 06 195, US-A-4,666,750). Diese Beschichtung soll außerdem noch den Abbau der Cellulose durch cellulytische Enzyme verhindern. In einer vor kurzem veröffentlichten Alternative ist das Kaliumsorbat dagegen mit Epichlorhydrin-Polyamin-Polyamid-Harz auf der Schlauchoberfläche verankert und befindet sich vorzugsweise auf der Schlauchinnenseite, während Glycerinmonolaurat auf der Schlauchaußenseite vorhanden ist (EP-A-0 247 437). Nach diesem Vorschlag sollen vorbefeuchtete Wursthüllen aus faserverstärkter Cellulose, die ohne weitere Wässerung verarbeitbar sind, vor dem Befall mit Schimmelpilzen geschützt werden.

Die EP-A-0 190 630 beschreibt verstärkte Nahrungsmittelhüllen, die einen solchen Wassergehalt aufweisen, daß das Wässern der Hülle vor dem Befüllen nicht mehr notwendig ist. Die vorgefeuchteten Hüllen enthalten eine wirksame Menge eines pH-aktiven antimykotischen Mittels, welches Pilzbefall vor ihrer Verwendung verhindern soll. Die hier genannten Mittel sind 1,2-Benzisothiazolin-3-on, 1,2-Dibromo-2,4-dicyanobutan, Natamycin und Alkylester der p-Hydroxybenzolsäure.

Die EP-A-0 247 437 beschreibt schlauchförmige Wursthüllen auf Basis von faserverstärkter Cellulose, die im vollständig gewässerten Zustand gegenüber dem Zustand vor der Wässerung eine Längenzunahme von 0,8 bis 2,5 % und einen Querschrumpf von 2,5 bis 5,2 % aufweisen. In einer besonderen Ausführungsform ist die Wursthülle ohne vorherige Wässerung mit Wurstbrät füllbar und besitzt hierzu einen Feuchtigkeitsgehalt von 22 bis 27 Gew.-% und einen Glyceringehalt von 17 bis 20 Gew.-%, jeweils bezogen auf das Gesamtgewicht, und weist auf ihrer Außenseite ein fungizides Mittel auf. In der Beschreibung wird auf drei weitere Veröffentlichungen Bezug genommen, in denen Kombinationen aus kationischen Harzen und Sorbinsäureestern, (mit Glyoxal vernetztem) Casein und Sorbinsäureestern und als alleiniges oder zusätzliches fungizides Mittel Glycerinmonolaurat erwähnt sind.

Diese bekannten Präparationen zeigen zwar nach dem Brühen oder Kochen der mit pastösen Nahrungsmitteln gefüllten Schlauchhüllen noch ausreichende Wirkung. Es wurde jedoch festgestellt, daß bei langanhaltender und intensiver Einwirkung von Schimmelpilzsporen auch diese Mittel keinen ausreichend sicheren Schutz vor Befall der Cellulosehülle mit Schimmelpilzen bieten. Werden beispielsweise Dauerwürste mehrere Wochen neben solchen Salamitypen an der Luft getrocknet, die auf ihrer Außenseite mit Edelschimmelpilzen besiedelt sind, so werden die Dauerwursthüllen durch die ständige Einwirkung der von den Salamitypen abgehenden Schimmelpilzsporen selbst dann im Laufe der Zeit vom Schimmelpilz befallen, wenn sie mit einer der obengenannten fungiziden Außenbeschichtungen versehen sind. Auch in Kunststoffbeutel verpackte Würste sind bei ungünstigen Lagerbedingungen (hohe Temperatur und Feuchtigkeit) besonders stark dem Befall von Schimmelpilzsporen ausgesetzt, so daß die Wirkung der bekannten fungiziden Mittel unter Umständen nicht ausreicht.

Es ist deshalb Aufgabe der Erfindung, ein fungizides Mittel bzw. eine fungizide Beschichtung oder Imprägnierung anzugeben, welche selbst in den genannten extremen Fällen einen Befall der Cellulosehülle mit Schimmelpilzen sicher verhindert. Die äußere Beschichtung bildet eine Überzugsschicht, die nicht notwendigerweise geschlossen und ununterbrochen ist. Es ist auch eine Imprägnierung der Cellulose ausreichend, wobei die fungiziden Mittel mehr oder weniger in das Hüllenmaterial eingedrungen sind.

Diese Aufgabe wird bei schlauchförmigen Nahrungsmittelhüllen aus Cellulosehydrat, die insbesondere als künstliche Wursthülle Verwendung finden, überraschenderweise dadurch gelöst, daß die äußere Beschichtung oder Imprägnierung eine oder mehrere fungizide heterocyclische Verbindungen aufweist. Zu diesen Verbindungen gehören insbesondere in 2-Stellung substituierte Benzimidazole und/oder Isothiazolonderivate und/oder ein Isothiazolon mit einem aromatischen Kern, insbesondere Benzisothiazolon. Geeignete Benzimidazol-Verbindungen sind insbesondere Carbendazim (Formel l), Thiabendazol (Formel m), Benomyl (Formel n) und Fuberidazol (Formel o). Geeignete Isothiazolonderivate und gegebenenfalls auch die Benzisothiazolonderivate enthalten am N-Atom (Formel a, d, e, f, h, i, j, k) und/oder wenigstens an einem der beiden C-Atome des Fünfrings (Formel b, c, d, e, g, h, Formel b und d: Wasserstoff ersetzt durch R) bzw. am aromatischen Kern (Formel j, k) wenigstens eine Alkylgruppe R. Durch die Einführung eines Halogen-, insbesondere Chloratoms, insbesondere am C-Atom benachbart zum S-Atom (Formel f, g, h, Formel f: R ersetzt durch den Wasserstoff) oder durch 2 Chloratome (Formel f: Wasserstoff ersetzt durch Chlor, Formel g: R ersetzt durch Chlor) an den beiden C-Atomen des Fünfrings wird einerseits die fungizide Wirkung verstärkt, andererseits auch noch die Wasserlöslichkeit des fungiziden Mittels herabgesetzt. Die Verbindungen mit den Formeln a bis k werden der Einfachheit halber in der Beschreibung und in den Ansprüchen als Isothiazolon-Verbindungen bezeichnet. 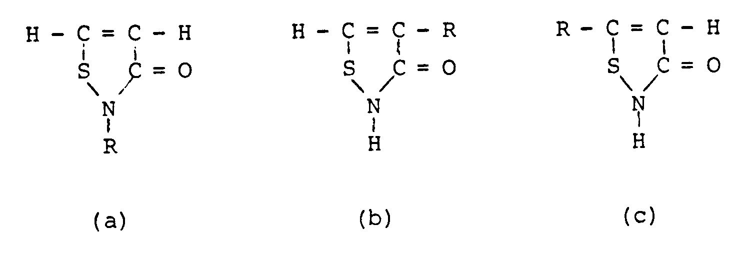 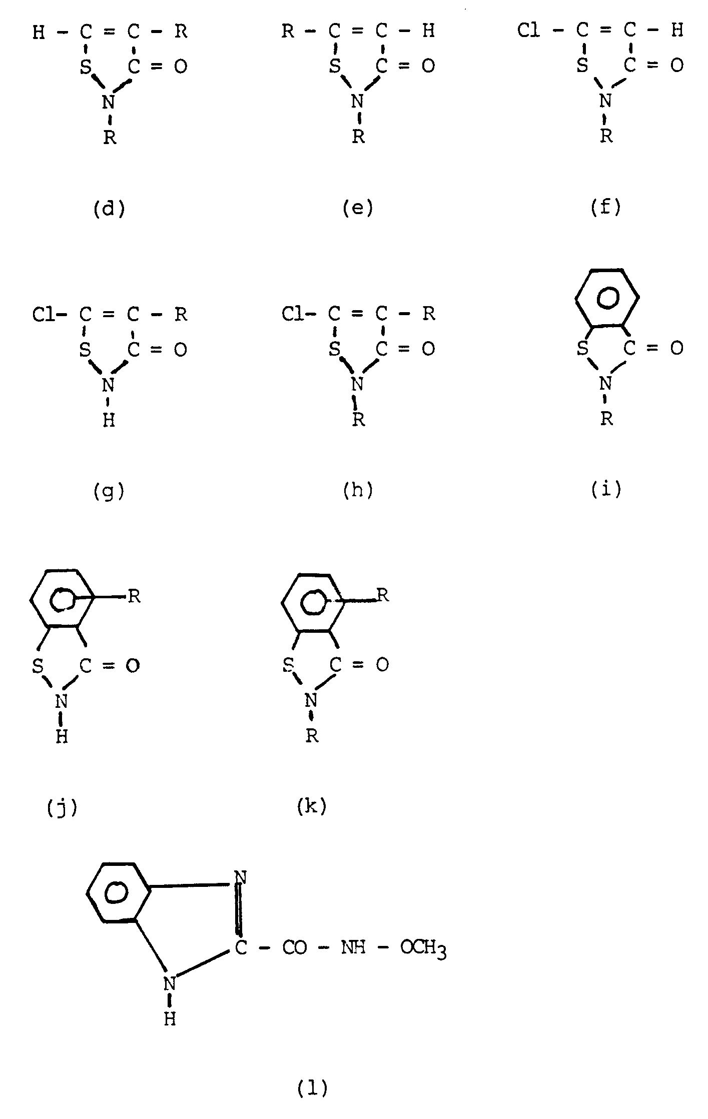 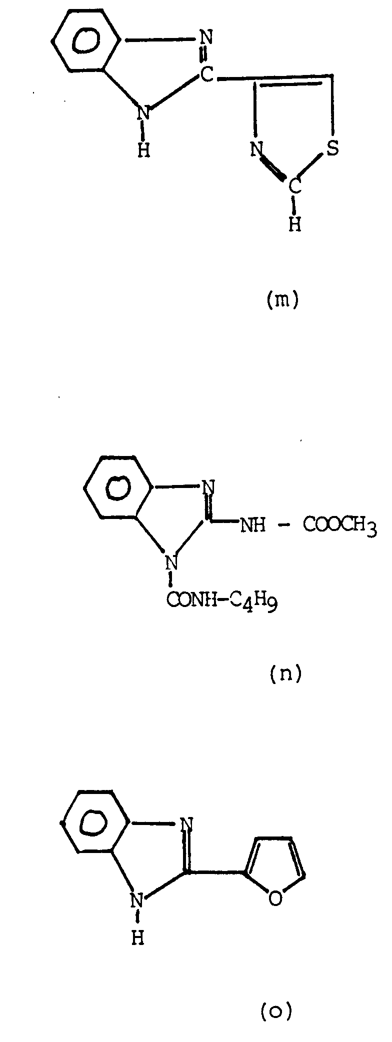
Gegenstand der Erfindung ist somit eine schlauchförmige Nahrungsmittelhülle, insbesondere künstliche Wursthülle, mit den im Anspruch 1 genannten Merkmalen. Die abhängigen Ansprüche geben besondere Ausführungsformen an. Von den genannten Verbindungen sind die der Formel a, c, f und i besonders bevorzugt. Die Alkylgruppe R ist ein aliphatischer Cycloalkylrest mit 3 bis 12 C-Atomen, vorzugsweise jedoch ein geradkettiger, insbesondere unverzweigter Kohlenwasserstoffrest, der ein- oder mehrfach ungesättigt (Alkenylrest), vorzugsweise aber gesättigt ist. Die Anzahl der C-Atome, insbesondere des geradkettigen N-Alkylrestes, sollte 20 C-Atome nicht übersteigen, da andernfalls die Substanz stark wachsartig wird und sich nur schwer auftragen läßt. Als größte praktikable Kettenlänge für den N-Alkylrest hat sich der Stearylrest (C₁₈H₃₇) erwiesen. Gewöhnlich wird allerdings der N-Alkylrest 14 C-Atome oder weniger umfassen, da dann die fungizide Wirkung höher ist. Leicht zugängliche Verbindungen enthalten z.B. 12 oder 8 C-Atome im geradkettigen Alkylrest des N-Atoms.

Der Alkylrest kann aber auch weniger als 8 C-Atome, z.B. 1 bis 5 C-Atome umfassen, wenn damit für den jeweiligen Wursttyp eine ausreichende Haftung des fungiziden Mittels an der Wursthaut bei der Herstellung der Wurst gewährleistet ist oder zusätzlich ein weiteres fungizides Mittel, insbesondere eine Benzimidazol-Verbindung, und/oder ein wasserunlösliches kationisches Harz als Bindemittel verwendet wird.

Die an einem der beiden C-Atome des Isothiazolonrings vorhandenen Alkylgruppen R sind vorzugsweise aliphatische geradkettige, unverzweigte Kohlenwasserstoffreste mit 1 bis 4 C-Atomen, insbesondere Methyl- oder Äthylreste.

Sofern mehr als eine Alkylgruppe vorhanden ist, ist die Summe der C-Atome der Alkylgruppen ebenfalls maximal etwa 20, vorzugsweise kleiner/gleich 16, insbesondere kleiner/gleich 12.

Bei Verwendung von Benzisothiazolon der Formel i oder k ist R am N-Atom (Formel i, k) und/oder am Benzolkern (Formel j, k) eine kleinere Alkylgruppe, insbesondere mit 1 bis 4 C-Atomen, z.B. Methyl-, Äthyl- oder Propylreste, wobei die Alkylgruppe eine besonders gute Verankerung dieser Verbindung auf der Außenseite der Wursthülle sicherstellt. Ebenso sind bei Verwendung von mit Chlor substituierten Isothiazolonderivaten kleinere Alkylgruppen am N-Atom und/oder am freien C-Atom des Isothiazolonrings vorhanden, z.B. C₁- bis C₁₂-Alkylgruppen oder C₃- bis C₈-Cycloalkylgruppen, insbesondere C₁- bis C₈-Alkyl- oder Cyclohexylreste am N-Atom. Sofern diese Verbindungen zu hohe Wasserlöslichkeit zeigen, werden sie ebenfalls zusammen mit anderen fungiziden Mitteln, insbesondere eine Benzimidazol-Verbindung oder Glycerinmonolaurat, und/oder einem wasserunlöslichen kationischen Harz als Bindemittel eingesetzt.

Isothiazolone und Benzisothiazolone mit kürzeren Kohlenwasserstoff-Resten haben den Vorteil, daß ihre fungizide Wirksamkeit höher ist, was auf ihre etwas höhere Wasserlöslichkeit zurückzuführen sein könnte. Dieser Vorteil wird aber dadurch beeinträchtigt, daß diese Verbindungen beim Wässern der Hüllen vor dem Füllprozeß und beim Brühen der fertigen Wurst teilweise von der Hüllenoberfläche entfernt werden. Es ist deshalb für manche Wursttypen günstiger, Alkylgruppen mit einer mittleren Kettenlänge von 6 bis 12 C-Atomen vorzusehen und die Auftragsmenge dieser schwerer löslichen, aber weniger wirksamen Verbindungen geringfügig anzuheben, um einen entsprechenden fungiziden Effekt zu erzielen.

Besonders schwer lösliche Verbindungen (R = C₈ bis C₁₄) werden für Wursthüllen verwendet, die auf ihrer inneren Oberfläche eine Gas- und Wasser-Barriereschicht, z.B. aus Vinylidenchloridmischpolymerisat, aufweisen und für Brühwurstsorten eingesetzt werden. Wursthüllen für Dauerwursttypen, die nur kurz vor dem Füllen gewässert und nach Fertigstellung der Wurst gegebenenfalls nur noch geräuchert werden, erhalten dagegen vorzugsweise eine fungizide Außenbeschichtung mit den leichter löslichen, aber wirksameren Substanzen.

Für eine optimale fungizide Wirksamkeit der heterocyclischen Verbindungen sollte sie in einer Mindestmenge von etwa 50 mg/m² vorhanden sein. Gewöhnlich werden 80 bis 200 mg/m² an fungiziden Verbindungen eingesetzt, wobei für die obere Grenze lebensmittel rechtliche Vorschriften zu beachten sind. Im Einzelfall werden deshalb zwangsläufig reduzierte Mengen von unter 20 oder sogar 15 mg/m² an fungiziden heterocyclischen Verbindungen eingesetzt, wobei deren Wirkung durch Zusatz von anderen fungiziden Verbindungen verstärkt wird.

Zur Verstärkung des fungiziden Effekts enthält der äußere Überzug gegebenenfalls noch Glycerinmonolaurat (EP-A-0 141 066, Seite 4), das in der alpha-Form als Racemat und/oder in der beta-Form vorliegt. Dieser Zusatz hat außerdem den Vorteil, daß die fungiziden heterocyclischen Verbindungen, vorzugsweise die Isothiazolon-Verbindungen, insbesondere die Benzimidazol-Verbindungen, auf der Schlauchoberfläche gleichmäßiger verteilt sind und selbst dann, wenn sie relativ gut wasserlöslich sind, besser auf der Schlauchoberfläche haften. Das Verhältnis der Auftragsmenge an fungizider heterocyclischer Verbindung, insbesondere an Isothiazolon- und/oder Benzimidazol-Verbindung zur Auftragsmenge an Glycerinmonolaurat beträgt zweckmäßigerweise 3 : 1 bis 1 : 3, vorzugsweise 2 : 1 bis 1 : 2. Ein besonders starker fungizider Effekt läßt sich durch ein Gemisch aus Benzisothiazolon-Verbindungen der Formel i, j oder k, insbesondere der Formel i, R = Wasserstoff, und Glycerinmonolaurat erzielen.

In einer weiteren Ausgestaltung der Erfindung enthält die äußere Beschichtung der Nahrungsmittelhülle noch zusätzlich ein gehärtetes, wasserunlösliches kationisches Harz, z.B. ein Kondensationsprodukt aus Eiweiß, beispielsweise Casein, mit Aldehyd, wie Formaldehyd oder Glyoxal, oder aus Harnstoff oder Melamin mit Aldehyd. Vorzugsweise ist das kationische Harz ein Kondensationsprodukt aus Epichlorhydrin mit Polyamin, Polyamid oder Polyaminpolyamid. Die Verwendung dieser Harze für Innenbeschichtungen von Wursthüllen ist beispielsweise aus der EP-Patentschrift 0 088 308 (US-A-4,563,376) bekannt. Die Harzschicht wird gemeinsam mit dem fungiziden Mittel auf die Außenseite der Hülle aufgebracht, so daß die fungiziden Mittel in der Harzschicht eingebettet sind. Es ist auch möglich, die Harzschicht in einer zweiten Stufe auf die Hüllenoberfläche aufzubringen, so daß sie dann einen Überzug über den zuerst aufgebrachten fungiziden Mitteln bildet. In beiden Ausführungsformen bleibt die fungizide Wirkung erhalten. Als zusätzlicher Effekt ergibt sich ein stark verringerter Abbau der Cellulose durch cellulytische Enzyme. Das Flächengewicht des aufgebrachten kationischen Harzes beträgt zweckmäßigerweise 50 bis 300, insbesondere 80 bis 200 mg/m².

Das eigentliche Hüllenmaterial besteht aus Cellulose, nämlich Cellulosehydrat, das auch als regenerierte Cellulose oder Zellglas bezeichnet wird. Die Celluloseschicht enthält vorzugsweise in ihrer Wandung eine Faserverstärkung, z.B. aus Hanffaserpapier, die auf einer oder beiden Oberflächen mit Cellulose bedeckt ist. Diese als Faserdarm bezeichneten Wursthüllen werden besonders für großkalibrige Würste eingesetzt.

Die Nahrungsmittelhülle wird auf übliche Weise beispielsweise nach dem Viskoseverfahren hergestellt. Hierbei wird ein Schlauch oder eine zu einem Schlauch geformte Faserbahn, z.B. aus Papier oder Hanffasern, durch eine Ringdüse auf der Innen- und/oder Außenseite mit alkalischer Viskoselösung beschichtet und mit einer sauren Fällflüssigkeit behandelt, welche die Koagulation der Viskose bewirkt. Die Viskoselösung enthält gegebenenfalls die zur Ausbildung einer weißen oder farbigen Hülle erforderlichen Farbstoffpigmente. Zur Herstellung verstärkungsfreier Cellulosehüllen wird die Viskose schlauchförmig direkt in das Fällbad ausgepreßt. Der erhaltene gegebenenfalls faserverstärkte Schlauch aus Cellulosehydrat-Gel wird vor dem Trocknen auf seiner Außenseite mit der erfindungswesentlichen Beschichtung versehen. Dies erfolgt auf übliche Weise, z.B. durch Tränken in einem Flüssigkeitsbad, Walzenauftrag oder Besprühen. Die Konzentration der fungiziden heterocyclischen Verbindungen in der wäßrigen oder alkoholischen Beschichtungsflüssigkeit beträgt insgesamt 0,5 bis 10, vorzugsweise 1 bis 5, insbesondere 1,5 bis 3,5 Gew.-%.

Wird zur Verstärkung der fungiziden Wirkung zusätzlich noch Glycerinmonolaurat eingesetzt, so wird der Anteil in der Beschichtungsflüssigkeit entsprechend der gewünschten Zusammensetzung der Überzugsschicht eingestellt. Zweckmäßigerweise wird das Glycerinmonolaurat zusammen mit einem Emulgator der Beschichtungsflüssigkeit zugegeben. Geeignete Emulgatoren und ihr üblicher Mengenanteil sind in der EP-A-0 141 066 beschrieben.

Zweckmäßigerweise enthält die Beschichtungsflüssigkeit noch einen oder mehrere Weichmacher für die Cellulose, insbesondere ein- oder mehrwertige Alkohole, wie z.B. Glycerin, Propandiol (Propylenglykol) oder Äthanol oder deren Mischungen in üblicher Menge.

Zur Verbesserung der Haftfestigkeit des Überzugs wird der Beschichtungsflüssigkeit gegebenenfalls eines der obengenannten kationischen Harze in noch wasserlöslicher Form zugegeben, welches beim abschließenden Trockenprozeß vernetzt und in seine wasserunlösliche Form übergeführt wird. Geeignete Harzlösungen sind insbesondere wäßrige Epichlorhydrin-Polyaminpolyamid-Lösungen, die im Handel erhältlich sind. Die Konzentration dieser Harzlösungen beträgt 0,8 bis 5, insbesondere 1 bis 3 Gew.-%. Abschließend erfolgt der Trockenprozeß, bei dem der Wassergehalt gewöhnlich bis auf Werte von 7 bis 15 % reduziert wird.

Die Erfindung wird durch die nachfolgenden Beispiele näher erläutert.

### Beispiel 1

Ein auf seiner Außenseite und Innenseite im Gewichtsverhältnis 4 : 6 mit alkalischer Viskoselösung versehener Faserschlauch (Durchmesser 60 mm) wird nach der Koagulation der Viskose und Regenerierung zu Cellulosehydrat-Gel auf seiner Außenseite mit Propan-1,2-diol als Lösungsmittel beschichtet. Je Liter Lösung sind 24 g N-Octyl-isothiazolon (Octyl = n-octyl) und 6 g Carbendazim als fungizide Mittel vorhanden.

Das Propandiol dient gleichzeitig als Weichmacher für die Cellulose. Auf der Innenseite des Schlauches wird eine 0,3 bis 0,7 gew.-%ige wäßrige Lösung eines hitzehärtbaren kationischen Harzes aufgebracht. Bei der anschließenden Trocknung des Schlauches wird das kationische Harz gehärtet und bildet eine Verankerungsimprägnierung für eine Innenbeschichtung aus Vinylidenchlorid-Copolymerisat. Dieses Copolymerisat wird in wäßriger Dispersion nach dem Trocknen des Schlauches in das Schlauchinnere gebracht. Bei einer weiteren Trockenstufe wird das Dispersionsmittel entfernt und eine zusammenhängende, wasser- und gasundurchlässige Sperrschicht aus VDC-Copolymerisat ausgebildet. Die Auftragsmenge der beiden fungiziden Mittel auf der äußeren Schlauchoberfläche beträgt etwa 220 mg/m², gravimetrisch bestimmt nach Ablösen mit Methylenchlorid. Die Anteile der beiden Verbindungen läßt sich UV-spektroskopisch anhand einer vorher erstellten Eichkurve ermitteln.

In einen einseitig abgebundenen Schlauchabschnitt wird Wurstbrät vom Brühwursttyp (Fleischwurst) gefüllt und das offene Wursthüllenende verschlossen. Die Wurst wird in üblicher Weise mit heißem Wasser gebrüht und abgekühlt. Zum Nachweis der fungiziden Wirkung der äußeren Oberflächenschicht wird der folgende Labortest durchgeführt:
1 Beutel (ca. 10 g) im Handel erhältlicher Reinzucht-Schimmelpilzsporen von "Penicillium nalgiovense" wird in 200 ml Wasser aufgeschlämmt. Die Wurst wird mit dieser Schimmelpilzsporen enthaltenden Dispersion versehen, in einen Polyäthylen-Beutel luftdicht verpackt und unter üblichen Bedingungen (2-8°C) gelagert. Nach einer Lagerdauer von 6 Wochen ist noch kein Schimmelbefall der Wursthülle feststellbar.

Als weiterer Vorteil ergibt sich ein deutlich verringerter Celluloseabbau durch cellulytische Enzyme, was sich durch den folgenden Labortest nachweisen läßt: 100 cm² Hüllenmaterial werden zur vollständigen Entfernung von Weichmacher (Propandiol, Glycerin) intensiv gewaschen, über 3 Stunden bei 110°C getrocknet und in einem Exsikkator abgekühlt. Die Probe wird gewogen, dann zerkleinert und in einem Erlenmeyerkolben mit
- 5 ml: 0,1 gew.-%igen Lösung von Cellulase von Aspergillus niger (Herst. Fluka AG, Buchs, Schweiz)
- 95 ml: Acetatpuffer (pH 5) aus 2 l wäßriger Lösung, enthaltend 82 g Natriumacetat und 60 g Essigsäure (100 %ig),
bedeckt. Nach 48-stündiger Behandlung bei 39°C im Trockenschrank wird die zerkleinerte Probe von der Lösung abgetrennt, mehrmals mit Wasser gewaschen und 3 Stunden bei 110°C getrocknet, abgekühlt und der Gewichtsverlust ermittelt. Es wird festgestellt, daß der Verlust an Cellulosematerial infolge der Einwirkung der Cellulase um 40 % geringer ist im Vergleich mit einer identischen Hülle ohne äußere Überzugsschicht.

### Beispiel 2

Ein nach Beispiel 1 hergestellter faserverstärkter Schlauch aus Cellulosehydrat-Gel wird in analoger Weise auf seiner Außenseite mit einer wäßrigen Beschichtungsflüssigkeit der folgenden Zusammensetzung versehen:
- 30 g/l: N-Octylisothiazolon, gelöst in 200 g Propan-1,2-diol (Octyl = n-octyl)
- 160 ml/l: einer wäßrigen Lösung von Epichlorhydrin-Polyaminpolyamid-Harz (12,5 gew.-%ig, ® Resamin HW 601, Herst. Cassella)
- 100 ml/l: Glycerin
Die Schlauchinnenseite wird analog Beispiel 1 mit einer wäßrigen Lösung eines hitzehärtbaren kationischen Harzes versehen, welches beim anschließenden Trockenprozeß in seine wasserunlösliche Form übergeht und eine haftvermittelnde Imprägnierung für die danach hergestellte Sperrschicht aus VDC-Copolymerisat bildet. Diese Innenschicht aus VDC-Copolymerisat wird ebenfalls wie in Beispiel 1 beschrieben hergestellt.

Die Auftragsmenge der äußeren Überzugsschicht aus fungizidem Mittel und kationischem Harz beträgt 60 mg/m² an kationischem Harz und 90 mg/m² an fungizidem Mittel.

In einseitig abgebundene Wursthüllenabschnitte wird Wurstmasse vom Brühwursttyp (Jagdwurst) eingefüllt, das offene Hüllenende mit einem Metallclip verschlossen. Die erhaltene Wurst wird in üblicher Weise mit heißem Wasser gebrüht, abgekühlt und in einem Kunststoffbeutel aromadicht verpackt.

Zum Nachweis der fungiziden Wirkung der äußeren Oberflächenschicht der Wursthülle ist im Innern des Kunststoffbeutels analog Beispiel 1 eine Schimmelpilzdispersion vorhanden.

Nach 6-wöchiger Lagerzeit im Kühlraum wird die Zweitverpackung entfernt. Selbst bei diesen extremen Lagerbedingungen ist kein Schimmelpilzbefall auf der Außenseite der Wursthülle feststellbar. Der analog Beispiel 1 durchgeführte Labortest zur Bestimmung des enzymatischen Celluloseabbaus ergibt, daß der Verlust an Cellulose um 75 % niedriger ist im Vergleich mit einer identischen Hülle ohne äußere Überzugsschicht.

Durch die nach der Erfindung vorgesehene Verwendung von fungiziden heterocyclischen Verbindungen in der äußeren Überzugsschicht wird die Nahrungsmittelhülle auf Basis von Cellulose oder faserverstärkter Cellulose vor Befall mit Schimmelpilzen geschützt. Die Verbindungen lassen sich durch Einführung von Substituenten oder durch Kombination der fungiziden Mittel den Anforderungen der verschiedenen Wursthüllentypen genau anpassen. Heterocyclische fungizide Verbindungen, insbesondere in Kombination mit Glycerinmonolaurat und/oder kationischen Harzen, zeigen sogar noch nach dem Brühen mit heißem Wasser ausgezeichnete fungizide Wirkung. Insbesondere bei langanhaltender Einwirkung von großen Mengen an Schimmelpilzsporen auf die fertiggestellte Wurst erweisen sich fungizide heterocyclische Verbindungen wirksamer als die bekannten Mittel, die bisher für Nahrungsmittelhüllen aus Cellulose vorgeschlagen wurden. Die fungizide Beschichtung bzw. Imprägnierung zeigt eine erhöhte Langzeitwirkung bei extremen Lagerbedingungen der Wurst. Dauerwursttypen lassen sich neben mit Edelschimmelpilzen versehenen Würsten über Monate schimmelfrei halten. Auch das bei Zweitverpackung von Brühwürsten in Folienbeuteln gefürchtete Problem der Schimmelbildung im Folienbeutel während der Lagerung ist mit der nun gefundenen Außenimprägnierung gelöst.

Als weiterer Effekt wird durch fungizide heterocyclische Verbindungen eine sehr gute Resistenz gegen den Abbau der Cellulose durch cellulytische Enzyme, insbesondere Cellulase, erzielt. Diese Enzyme werden bekanntlich durch Schimmelpilze, aber auch von Hefen und bakteriellen Schmierbelägen gebildet, die auf der Außenseite der Wurst bei mangelnder Belüftung entstehen. Der Abbau der Cellulose durch diese Enzyme wird im Vergleich mit unbeschichteten Hüllen um mindestens 30 %, bei Kombination der fungiziden Mittel mit einem gehärteten kationischen Harz sogar bis zu 80 % reduziert.

## Patentansprüche

1. Schlauchförmige Nahrungsmittelhülle, insbesondere künstliche Wursthülle, aus Cellulosehydrat mit einer äußeren Beschichtung und/oder Imprägnierung, die ein fungizides Mittel enthält, dadurch gekennzeichnet, daß diese Beschichtung und/oder Imprägnierung ein in 2-Stellung substituiertes Benzimidazol und/oder an wenigstens einem C-Atom mit Halogen und/oder an wenigstens einem C- und/oder N-Atom mit einer Alkylgruppe substituiertes Isothiazolon und/oder ein Isothiazolon mit ankondensiertem aromatischen Kern, insbesondere Benzisothiazolon, aufweist, wobei das Benzisothiazolon am N-Atom und/oder am Benzolkern mit wenigstens einer Alkylgruppe substituiert ist.

2. Hülle nach Anspruch 1, dadurch gekennzeichnet, daß die Benzimidazol-Verbindung Carbendazim, Benomyl, Fuberidazol und/oder Thiabendazol umfaßt.

3. Hülle nach Anspruch 1 oder 2, dadurch gekennzeichnet, daß am N-Atom des Isothiazolon-Rings und/oder wenigstens an einem der beiden C-Atome des Isothiazolon-Rings bzw. am aromatischen Kern wenigstens eine Cycloalkyl- oder n-Alkylgruppe vorhanden ist.

4. Hülle nach einem der Ansprüche 1 bis 3, dadurch gekennzeichnet, daß an einem oder beiden C-Atomen des Isothiazolon-Rings, insbesondere am C-Atom, welches dem Schwefelatom benachbart ist, ein bzw. zwei Chloratome vorhanden sind.

5. Hülle nach einem der Ansprüche 1 bis 4, dadurch gekennzeichnet, daß die Überzugsschicht wenigstens ein weiteres fungizides Mittel, vorzugsweise Glycerinmonolaurat enthält.

6. Hülle nach einem der Ansprüche 1 bis 5, dadurch gekennzeichnet, daß die Alkylgruppe(n) insgesamt bis zu 20, vorzugsweise bis zu 14, C-Atome enthält (enthalten).

7. Hülle nach Anspruch 6, dadurch gekennzeichnet, daß die N-Alkylgruppe des Isothiazolonrings ein alicyclischer oder aliphatischer geradkettiger Kohlenwasserstoffrest, insbesondere eine Cyclohexyl-, Methyl-, Äthyl-, Propyl-, n-Octyl-, n-Dodecyl- oder n-Octadecylgruppe ist.

8. Hülle nach einem der Ansprüche 1 bis 7, dadurch gekennzeichnet, daß die C-Alkylgruppe des Isothiazolonrings ein geradkettiger Kohlenwasserstoffrest mit 1 bis 4 C-Atomen ist.

9. Hülle nach einem der Ansprüche 1 bis 8, dadurch gekennzeichnet, daß wenigstens ein C-Atom des Isothiazolonrings mit Chlor und das N-Atom mit einer Alkylgruppe substituiert ist.

10. Hülle nach einem der Ansprüche 1 bis 9, dadurch gekennzeichnet, daß die Überzugsschicht aus einem hitzegehärteten kationischen Harz, insbesondere aus Epichlorhydrin-Polyaminpolyamid-Harz, besteht, welches die fungiziden Verbindungen enthält.

11. Hülle nach einem der Ansprüche 1 bis 10, dadurch gekennzeichnet, daß in der Überzugsschicht Isothiazolon- und/oder Benzimidazol-Verbindungen zusammen mit Glycerinmonolaurat vorhanden sind, wobei die gesamte Auftragsmenge der erstgenannten Verbindungen zu der von Glycerinmonolaurat sich wie 3 : 1 bis 1 : 3, insbesondere 2 : 1 bis 1 : 2, verhält (Gewichtsverhältnis).

12. Hülle nach einem der Ansprüche 1 bis 11, dadurch gekennzeichnet, daß in der Überzugsschicht die Isothiazolon- und Benzimidazol-Verbindungen, insbesondere Carbendazim und/oder Thiabendazol, vorhanden sind, wobei das Gewichtsverhältnis der beiden Verbindungsgruppen 10 : 1 bis 1 : 3, vorzugsweise 7 : 1 bis 1 : 1, insbesondere 4 : 1 bis 2 : 1 beträgt.

13. Hülle nach einem der Ansprüche 10 bis 12, dadurch gekennzeichnet, daß das Gewichtsverhältnis von kationischem Harz zu fungiziden Mitteln 1 : 1 bis 10 : 1, insbesondere 2 : 1 bis 5 : 1, beträgt.

14. Verwendung von in 2-Stellung substituiertem Benzimidazol und/oder an wenigstens einem C-Atom mit Halogen und/oder an wenigstens einem C- und/oder N-Atom mit einer Alkylgruppe substituiertem Isothiazolon und/oder einem Isothiazolon mit ankondensiertem aromatischen Kern, insbesondere Benzisothiazolon, wobei das Benzisothiazolon am N-Atom und/oder am Benzolkern mit wenigstens einer Alkylgruppe substituiert ist, in äußeren Beschichtungen und/oder Imprägnierungen von Wursthüllen auf Basis von Cellulose.

## Claims

1. A tubular foodstuff casing, in particular synthetic sausage casing made of cellulose hydrate having an external covering and/or impregnation containing a fungicide, wherein this coating and/or impregnation comprises a benzimidazole substituted in the 2-position and/or an isothiazolone substituted at at least one carbon atom by halogen and/or at at least one carbon and/or nitrogen atom by an alkyl group and/or an isothiazolone containing a fused-on aromatic ring, in particular benzoisothiazolone, the benzoisothiazolone being substituted at the nitrogen atom and/or at the benzene ring by at least one alkyl group.

2. The casing as claimed in claim 1, wherein the benzimidazole compound comprises carbendazim, benomyl, fuberidazole and/or thiabendazole.

3. The casing as claimed in claim 1 or 2, wherein at least one cycloalkyl or N-alkyl group is present at the nitrogen atom of the isothiazolone ring and/or at least at one of the two carbon atoms of the isothiazolone ring or at the aromatic ring.

4. The casing as claimed in any one of claims 1 to 3, wherein one or two chlorine atoms are present at one or both carbon atoms of the isothiazolone ring, in particular at the carbon atom adjacent to the sulfur atom.

5. The casing as claimed in any one of claims 1 to 4, wherein the covering layer contains at least one further fungicide, preferably glycerol monolaurate.

6. The casing as claimed in any one of claims 1 to 5, wherein the alkyl group(s) contains (contain) a total of up to 20, preferably up to 14, carbon atoms.

7. The casing as claimed in claim 6, wherein the N-alkyl group of the isothiazolone ring is an alicyclic or aliphatic straight-chain hydrocarbon radical, in particular a cyclohexyl, methyl, ethyl, propyl, n-octyl, n-dodecyl or n-octadecyl group.

8. The casing as claimed in any one of claims 1 to 7, wherein the C-alkyl group of the isothiazolone ring is a straight-chain hydrocarbon radical having 1 to 4 carbon atoms.

9. The casing as claimed in any one of claims 1 to 8, wherein at least one carbon atom of the isothiazolone ring is substituted by chlorine and the nitrogen atom is substituted by an alkyl group.

10. The casing as claimed in any one of claims 1 to 9, wherein the covering layer consists of a heat-cured cationic resin, in particular an epichlorohydrin/polyaminopolyamide resin, which contains the fungicidal compounds.

11. The casing as claimed in any one of claims 1 to 10, wherein isothiazolone and/or benzimidazole compounds are present together with glycerol monolaurate in the covering layer, the ratio of the total amount applied of the first-mentioned compounds to that of glycerol monolaurate being 3:1 to 1:3, in particular 2:1 to 1:2 (weight ratio).

12. The casing according to any one of claims 1 to 11, wherein the isothiazolone and benzimidazole compounds, in particular carbendazim and/or thiabendazole, are present in the covering layer, the weight ratio of the two groups of compounds being 10:1 to 1:3, preferably 7:1 to 1:1, in particular 4:1 to 2:1.

13. The casing as claimed in any one of claims 10 to 12, wherein the weight ratio of cationic resin to fungicide is 1:1 to 10:1, in particular 2:1 to 5:1.

14. Use of a benzimidazole substituted in the 2-position and/or an isothiazolone substituted at at least one carbon atom by halogen and/or at at least one carbon and/or nitrogen atom by an alkyl group and/or an isothiazolone containing a fused-on aromatic ring, in particular benzoisothiazolone, the benzoisothiazolone being substituted at the nitrogen atom and/or at the benzene ring by at least one alkyl group, in external coatings and/or impregnations of sausage casings based on cellulose.

## Revendications

1. Enveloppe tubulaire pour aliments, en particulier boyau artificiel pour saucisse, en hydrate de cellulose, pourvue d'un revêtement et/ou d'une imprégnation externe, qui contient un fongicide, caractérisée en ce que ce revêtement et/ou cette imprégnation comporte un benzimidazole substitué en position 2, et/ou une isothiazolone substituée par un atome d'halogène sur au moins un atome de carbone et/ou par un groupe alkyle sur au moins un atome de carbone et/ou un atome d'azote, et/ou une isothiazolone à noyau aromatique condensé, en particulier la benzisothiazolone, ladite benzisothiazolone étant substituée sur l'atome d'azote et/ou sur le noyau benzénique par au moins un groupe alkyle.

2. Enveloppe selon la revendication 1, caractérisée en ce que le composé benzimidazolique englobe la carbendazime, le bénomyl, le fubéridazole et/ou le thiabendazole.

3. Enveloppe selon la revendication 1 ou 2, caractérisée en ce qu'au moins un groupe cycloalkyle ou n-alkyle est présent sur l'atome d'azote du cycle isothiazolone et/ou au moins sur l'un des deux atomes de carbone du cycle isothiazolone ou sur le noyau aromatique.

4. Enveloppe selon une des revendications 1 à 3, caractérisée en ce qu'un ou deux atomes de chlore est (sont) présent(s) sur un ou deux des atomes de carbone du cycle isothiazolone, en particulier sur l'atome de carbone voisin de l'atome de soufre.

5. Enveloppe selon une des revendications 1 à 4, caractérisée en ce que la couche de revêtement contient au moins un autre fongicide, en particulioer du monolaurate de glycérol.

6. Enveloppe selon une des revendications 1 à 5, caractérisée en ce que le (les) groupe(s) alkyle renferme (renferment) au total jusqu'à 20, de préférence jusqu'à 14 atomes de carbone.

7. Enveloppe selon la revendication 6, caractérisée en ce que le groupe n-alkyle du cycle isothiazolone est un reste hydrocarboné a chaîne droite, alicyclique ou aliphatique, en particulier un groupe cyclohexyle, méthyle, éthyle, propyle, n-octyle, n-dodécyle ou n-octadécyle.

8. Enveloppe selon une des revendications 1 à 7, caractérisée en ce que le groupe C-alkyle du cycle isothiazolone est un reste hydrocarboné à chaîne droite en C₁₋₄.

9. Enveloppe selon une des revendications 1 à 8, caractérisée en ce qu'au moins un atome de carbone du cycle isothiazolone est substitué par du chlore et que l'atome d'azote est substitué par un groupe alkyle.

10. Enveloppe selon une des revendications 1 à 9, caractérisée en ce que la couche de revêtement se compose d'une résine cationique thermodurcie, en particulier de résine épichlorhydrine/polyaminepolyamide, qui contient les composés fongicides.

11. Enveloppe selon une des revendications 1 à 10, caractérisée en ce que, dans la couche de revêtement, des dérivés d'isothiazolone et/ou de benzimidazole sont présents conjointement avec du monolaurate de glycérol, la quantité totale des composés nommés en premier étant, par rapport à la quantité du monolaurate de glycérol, dans le rapport 3:1 à 1:3, en particulier 2:1 à 1:2 (rapport en poids).

12. Enveloppe selon une des revendications 1 à 11, caractérisée en ce que, dans la couche de revêtement, des dérivés d'isothiazolone et/ou de benzimidazole sont présents, en particulier carbendazime et/ou thiabendazole, dans un rapport pondéral des deux groupes de composés valant de 10:1 à 1:3, de préférence de 7:1 à 1:1, en particulier de 4:1 à 2:1.

13. Enveloppe selon une des revendications 10 à 12, caractérisée en ce que le rapport pondéral de la résine cationique aux agents fongicides vaut de 1:1 à 10:1, en particulier de 2:1 à 5:1.

14. Utilisation, dans des revêtements et/ou imprégnations externes de boyaux de saucisse à base de cellulose, de benzimidazole substitué en position 2, et/ou d'isothiazolone substituée par un atome d'halogène sur au moins un atome de carbone et/ou par un groupe alkyle sur au moins un atome de carbone et/ou un atome d'azote, et/ou d'une isothiazolone à noyau aromatique condensé, en particulier benzisothiazolone, ladite benzisothiazolone étant substituée sur l'atome d'azote et/ou sur le noyau benzénique par au moins un groupe alkyle.
